# EUROPÄISCHE PATENTSCHRIFT

(11) **EP 2 764 342 B1**
(45) Veröffentlichungstag und Bekanntmachung des Hinweises auf die Patenterteilung: **20.01.2016**
(21) Anmeldenummer: 12772091.0
(22) Anmeldetag: 24.09.2012
(51) Int. Cl.: G01L 5/24, G01L 25/00

(54) **VORRICHTUNG UND VERFAHREN ZUR ÜBERPRÜFUNG EINES MONTAGESCHLÜSSELS**
DEVICE AND METHOD FOR CONTROLLING A MOUNTING KEY
DISPOSITIF ET PROCEDE PERMETTANT DE CONTROLER UNE CLÉ DE MONTAGE

(30) Priorität: 05.10.2011 DE 102011084008
(43) Veröffentlichungstag der Anmeldung: 13.08.2014
(73) Patentinhaber: Robert Bosch GmbH, 70442 Stuttgart (DE)
(72) Erfinder: NIEHAGE, Norbert, 73252 Lenningen (DE); LEMKE, Gerhard, 73730 Esslingen (DE); HOSS, Reinhard, 73207 Plochingen (DE); REYER, Howard, 73061 Ebersbach (DE); BELKE, Christian, 96103 Hallstadt (DE)
(86) Internationale Anmeldenummer: PCT/EP2012/068747
(87) Internationale Veröffentlichungsnummer: WO 2013/050266

(56) Entgegenhaltungen:
- US-A1- 2010 270 721
- US-B1- 6 167 788
- US-B1- 6 609 407

## Beschreibung

Die Erfindung betrifft eine Testvorrichtung und ein Testverfahren zum Überprüfen eines Montageschlüssels, insbesondere zum Überprüfen einer in den Montageschlüssel integrierten Winkelmessvorrichtung.

### Stand der Technik

Zunehmend werden zum An- bzw. Festziehen von Schraubverbindungen mit einem vorgegebenen Drehmoment Montageschlüssel eingesetzt, die neben oder anstelle einer herkömmlichen Anzeige des auf die Verschraubung ausgeübten Drehmoments eine integrierte Winkelmessvorrichtung und -anzeige aufweisen, um den Winkel, um den der Montageschlüssel gedreht worden ist, zu messen und anzuzeigen.

Mit derartigen Montageschlüsseln ist es möglich, durch Voranziehen der Schraubverbindung mit einem leichten Drehmoment und anschließendem Drehen des Montageschlüssels um einen definierten Drehwinkel Schraubverbindungen herzustellen, bei denen sich die Vorspannkraft der Schraubverbindung in einem geringeren Toleranzbereich bewegt als beim Anziehen mit einem herkömmlichen Drehmomentschlüssel, der das aufgebrachte Anzugmoment anzeigt oder bei Überschreiten eines vorgegebenen Anzugmoments "durchrutscht".

US 6 609 407 offenbard ein Verfahren zum Testen eines Drehmomentschlüssels ohne Winkelmessvorrichtung.

Um eine gleichbleibende Qualität der so hergestellten Schraubverbindungen zu gewährleisten, ist eine regelmäßige Überprüfung und ggf. Kalibrierung der in den Montageschlüssel integrierten Winkelmessvorrichtung erforderlich.

Die bisher bekannten Verfahren zum Überprüfen und Kalibrieren derartiger Montageschlüssel sind entweder, wie beispielsweise das Einsenden an den Hersteller, aufwendig, langwierig und teuer oder weisen, wie beispielsweise das Überprüfen der Winkelanzeige mit so genannten Winkelscheiben, nicht die notwendige Genauigkeit auf.

### Offenbarung der Erfindung

Aufgabe der Erfindung ist es, ein Verfahren und eine Vorrichtung bereitzustellen, die es ermöglichen, Montageschlüssel mit integrierter Winkelmessvorrichtung schnell, kostengünstig und mit hoher Genauigkeit zu überprüfen.

In einem erfindungsgemäßen Testverfahren zum Überprüfen einer in einen Montageschlüssel integrierten Winkelmessvorrichtung wird der Montageschlüssel zunächst in einer drehbaren Fixiervorrichtung fixiert. Die in den Montageschlüssel integrierte Winkelmessvorrichtung wird, wenn nötig, beispielsweise durch Vorspannen des Montageschlüssels, aktiviert. Nach dem Aktivieren der Winkelmessvorrichtung wird die Fixiervorrichtung und damit auch der fixierte Montageschlüssel um wenigstens einen Winkel gedreht, der zuvor festgelegt worden ist und/oder mit hoher Genauigkeit abgelesen werden kann.

Der von der in den Montageschlüssel integrierten Winkelmessvorrichtung gemessene Drehwinkel wird abgelesen. Durch Vergleichen des Drehwinkels, der an der Winkelmessvorrichtung des Montageschlüssels abgelesen worden ist, mit dem bekannten, definierten Winkel, um den die Fixiervorrichtung mit dem Montageschlüssel gedreht worden ist, kann die in den Montageschlüssel integrierte Winkelmessvorrichtung überprüft werden; insbesondere kann die Differenz der beiden Winkel ermittelt und mit einem vorgegebenen Toleranzwert verglichen werden.

Ist die Differenz der beiden abgelesenen Winkel kleiner als der vorgegebene Toleranzwert, ist die in den Montageschlüssel integrierte Winkelmessvorrichtung in Ordnung und der Montageschlüssel kann weiter eingesetzt werden. Überschreitet die Differenz zwischen dem von der Winkelanzeige im Montageschlüssel angezeigten Winkel und dem vorgegebenen Winkel, um den die Fixiervorrichtung zusammen mit dem Montageschlüssel gedreht worden ist, den vorgegebenen Toleranzwert, sind weitere Maßnahmen, wie z.B. eine Neu-Kalibrierung und/oder ein Einsenden an den Hersteller erforderlich, um die gewünschte Genauigkeit wieder herzustellen, bevor der Montageschlüssel erneut zum Einsatz kommen kann.

Eine erfindungsgemäße Testvorrichtung zum Überprüfen eines Montageschlüssels mit integrierter Winkelmessvorrichtung weist eine Fixiervorrichtung auf, die zum Fixieren, insbesondere Einspannen eines zu überprüfenden Montageschlüssels ausgebildet ist. Die Fixiervorrichtung ist um einen definierten Winkel drehbar, wobei der Winkel, um den die Fixiervorrichtung gedreht worden ist, mit einer vorgegebenen Genauigkeit festgelegt und/oder an der Testvorrichtung abgelesen werden kann.

Eine erfindungsgemäße Testvorrichtung und ein erfindungsgemäßes Testverfahren ermöglichen ein schnelles Überprüfen von Montageschlüsseln mit integrierter Winkelmessvorrichtung ohne lange Ausfallzeiten, bei geringem Aufwand und zu geringen Kosten. Eine erfindungsgemäße Testvorrichtung zum Überprüfen von Montageschlüsseln ist kostengünstig realisierbar und einsetzbar.

Insbesondere kann als Testvorrichtung zum Überprüfen von Montageschlüsseln mit integrierter Winkelmessvorrichtung ein herkömmlicher Einspritzpumpenprüfstand verwendet werden, da ein derartiger Einspritzpumpenprüfstand viele der zum Überprüfen von Montageschlüsseln mit integrierter Winkelmessvorrichtung notwendigen Merkmale aufweist. Durch Verwenden eines im Werkstattbereich häufig bereits vorhandenen Einspritzpumpenprüfstandes können die Kosten, die beim erfindungsgemäßen Überprüfen von Montageschlüsseln mit integrierter Winkelmessvorrichtung anfallen, besonders gering gehalten werden.

Jeder Montageschlüssel weist einen Kontaktbereich auf, der beim bestimmungsgemäßen Einsatz im Kontakt mit der anzuziehenden Schraube steht und auf die anzuziehende Schraubverbindung einwirkt. In einer Ausführungsform wird die in den Montageschlüssel integrierte Winkelmessvorrichtung durch Drehen des Kontaktbereiches des Montageschlüssels aktiviert. Dies ermöglicht eine einfache und zuverlässige Aktivierung der integrierten Winkelmessvorrichtung, wie sie üblicherweise auch bei der bestimmungsgemäßen Anwendung des Montageschlüssels erfolgt. Alternativ kann die Winkelmessvorrichtung beispielsweise durch Betätigen eines Schalters aktiviert werden.

In einer Ausführungsform ist ein Drehwinkelsensor vorgesehen, der ausgebildet ist, um den Winkel, um den die Fixiervorrichtung und damit auch der in der Fixiervorrichtung fixierte Montageschlüssel gedreht werden, zu messen. Der Wert, um den der Montageschlüssel gedreht worden ist, kann so zuverlässig mit der gewünschten Genauigkeit bestimmt werden.

In einer Ausführungsform ist der Drehwinkelsensor derart ausgebildet, dass er den Winkel, um den die Fixiervorrichtung gedreht wird, mit hoher Genauigkeit, insbesondere mit einer Genauigkeit von mindestens 0,1 Grad, messen kann. Dadurch ist es möglich, die Winkelanzeige des Montageschlüssels mit einer hohen Genauigkeit zu überprüfen. Eine Genauigkeit von mindestens 0,1 Grad ist insbesondere höher als die beim Einsatz des Montageschlüssels üblicherweise erforderliche Genauigkeit der Winkelmessung.

In einer Ausführungsform erfolgt das Drehen der Fixiervorrichtung und des darin fixierten Montageschlüssels mit einer konstanten Winkelgeschwindigkeit. Trägheitseffekte, die durch Beschleunigen oder Abbremsen der Drehbewegung des Montageschlüssels auftreten können, werden so zuverlässig vermieden und die Genauigkeit des Testverfahrens wird erhöht.

In einer Ausführungsform ist ein Motor vorgesehen ist, der ausgebildet ist, um die Fixiervorrichtung zu drehen. Ein Motor, der vorzugsweise als Elektromotor ausgebildet ist, ermöglicht ein bequemes und insbesondere gleichmäßiges Drehen der Fixiervorrichtung um einen definierten Winkel ohne möglicherweise schwankende Einflüsse des Bedieners, wie sie bei einer manuellen Drehung auftreten können. Die Messungen sind so besonders zuverlässig und mit hoher Genauigkeit reproduzierbar.

In einer Ausführungsform ist der Motor als elektrischer Schrittmotor ausgebildet. Ein Schrittmotor ermöglicht es, die Fixiervorrichtung durch eine geeignete Ansteuerung mit hoher Genauigkeit um einen vorgegebenen Winkel zu drehen, so dass kein zusätzlicher Drehwinkelsensor erforderlich ist, um den Winkel, um den die Fixiervorrichtung und der darin fixierte Montageschlüssel gedreht worden sind, zu messen. Eine mit einem Schrittmotor versehene Testvorrichtung ermöglicht es daher, die in den Montageschlüssel integrierte Winkelmessvorrichtung zuverlässig mit hoher Genauigkeit zu überprüfen. Die Kosten für den Drehwinkelsensor können eingespart werden und der Drehwinkelsensor entfällt als mögliche Fehlerquelle.

In einer Ausführungsform ist der Schrittmotor so ausgebildet, dass er in der Lage ist, die Fixiervorrichtung in konstanten Schritten von nicht mehr als 0,1 Grad pro Schritt zu drehen. Die Fixiervorrichtung und ein in der Fixiervorrichtung fixierter Montageschlüssel können so mit hoher Genauigkeit, insbesondere mit einer Genauigkeit von mindestens 0,1 Grad, gedreht werden, so dass die in den Montageschlüssel integrierte Winkelmessvorrichtung mit hoher Genauigkeit überprüft werden kann.

Die Erfindung wird im Folgenden unter Bezugnahme auf die beigefügten Figuren näher erläutert. Dabei zeigt:
Fig. 1 eine Frontansicht eines Ausführungsbeispiels einer erfindungsgemäßen Testvorrichtung mit einem zu prüfenden Montageschlüssel; und
Fig. 2 eine Seitenansicht der in der Fig. 1 gezeigten Testvorrichtung mit dem zu prüfenden Montageschlüssel.

Eine erfindungsgemäße Testvorrichtung weist einen elektrischen Motor 16 auf, der fest an einer Montageschiene 24, die beispielsweise an einem nicht gezeigten Werkstatttisch angebracht ist, montiert ist.

Der Motor 16 weist eine Welle 17 auf, die sich in dem in den Figuren gezeigten Ausführungsbeispiel in horizontaler Richtung erstreckt und die im Betrieb vom Motor 16 angetrieben und um ihre Längsachse A gedreht wird. An der Welle 17 ist eine um die Längsachse A der Welle 17 rotationssymmetrische Schwungmasse 18 angebracht.

Auf der von dem Motor 16 abgewandten Seite der Schwungmasse 18 ist über eine Kupplung 20, die insbesondere als Rutschkupplung ausgebildet sein kann, eine Fixiervorrichtung 8 montiert, die zur Aufnahme eines zu überprüfenden Montageschlüssels 2 mit integrierter Winkelmessvorrichtung ausgebildet ist.

Die Fixiervorrichtung 8 weist insbesondere eine Aufnahme 10 auf, die zur Aufnahme eines Kontaktbereiches des Montageschlüssels 2, der beim bestimmungsgemäßen Einsatz des Montageschlüssels 2 auf die anzuziehende Schraubverbindung einwirkt, ausgebildet ist. Durch einen Betätigungshebel 12, der durch eine Feststellung 14 bewegbar und fixierbar ist, kann der Kontaktbereich des Montageschlüssels 2 in der Aufnahme 10 fixiert und insbesondere eingespannt werden.

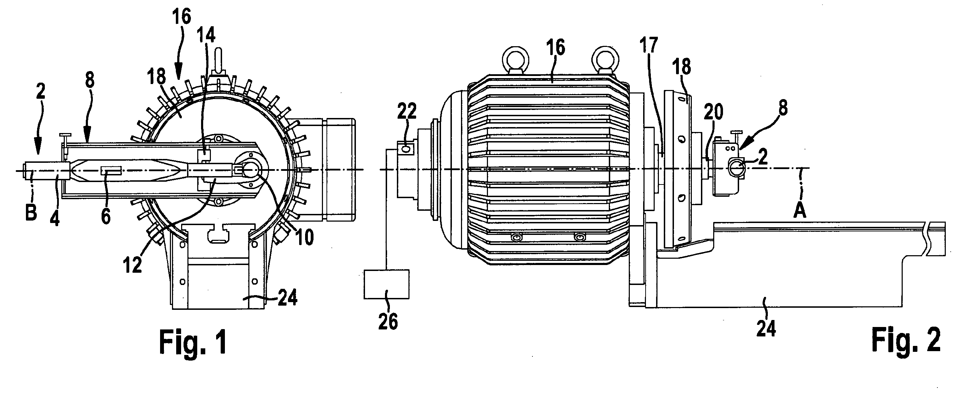

Der Montageschlüssel 2 weist einen stabförmig ausgebildeten Griffbereich 4 auf, dessen Längsachse B in einem rechten Winkel zur Achse des Kontaktbereichs ausgebildet ist. Die Längsachse B des Griffbereichs 4 des Montageschlüssels 2 ist in einem rechten Winkel zur Achse A der Welle 17 des Motors 16 angeordnet, wenn der Montageschlüssel 2 ordnungsgemäß in der Fixiervorrichtung 8 eingespannt ist, wie in der Fig. 1 gezeigt.

Beim oder nach dem Einspannen des Kontaktbereichs des Montageschlüssels 2 in der Fixiervorrichtung 8 wird der Kontaktbereich des Montageschlüssels 2 durch Betätigen des Hebels 12 gegenüber dem Griffbereich 4 leicht verdreht, so dass die in den Montageschlüssel 2 integrierte Winkelmessvorrichtung, die beispielsweise als elektrisch betriebenes Gyrometer ausgebildet ist, aktiviert wird. Die Winkelmessvorrichtung kann ggf. auch anders, z.B. durch Betätigen eines Schalters, aktiviert werden. Wichtig ist, dass die integrierte Winkelmessvorrichtung während der folgenden Drehung aktiv ist.

Nachdem der Montageschlüssel 2 in der Fixiervorrichtung 8 fixiert und die in dem Montageschlüssel 2 integrierte Winkelmessvorrichtung aktiviert worden ist, wird der Motor 16 derart angesteuert, dass er die Welle 17 und damit die Fixiervorrichtung 8 und den in der Fixiervorrichtung 8 fixierten Montageschlüssel 2 um einen definierten Winkel um die Längsachse A der Welle 17 des Motors 16 dreht.

Die aktivierte, in den Montageschlüssel 2 integrierte Winkelmessvorrichtung misst den Winkel, um den der Griffbereich 4 des Montageschlüssels 2 gedreht wird. Der von der integrierten Winkelmessvorrichtung gemessene Winkel wird auf einer Anzeigevorrichtung 6, die beispielsweise in Form einer Digitalanzeige im Griffbereich 4 des Montageschlüssels 2 ausgebildet ist, angezeigt. Gleichzeitig wird der Winkel, um den die Welle 17 des Motors 16 gedreht wird, von einem auf der gegenüberliegenden, von der Fixiervorrichtung 8 abgewandten Seite des Motors 16 angebrachten Winkelsensor 22 gemessen und das Ergebnis der Messung auf einer externen Anzeigevorrichtung 26 angezeigt.

Durch Vergleichen des von der in den Montageschlüssel 2 integrierten Anzeigevorrichtung 6 angezeigten Winkels mit dem von der externen Anzeigevorrichtung 26 angezeigten Winkel kann die in den Montageschlüssel 2 integrierte Winkelmessvorrichtung überprüft werden. Insbesondere kann die Differenz der von den beiden Anzeigevorrichtungen 6, 26 angezeigten Winkel mit einem vorgegebenen Toleranzwert verglichen werden. Ist die Differenz zwischen den beiden angezeigten Winkeln größer als der vorgegebene Toleranzwert, ist ein erneutes Kalibrieren der in den Montageschlüssel 2 integrierten Winkelmessvorrichtung 2 erforderlich.

Als Motor 16 kann beispielsweise der Motor 16 eines im Werkstattbereich häufig bereits vorhandenen Einspritzpumpenprüfstandes eingesetzt werden, der mit einer zusätzlichen Fixiervorrichtung 8 versehen worden ist. Das Überprüfen der in den Montageschlüssel 2 integrierten Winkelmessvorrichtung ist so besonders kostengünstig realisierbar, da nur die Kosten für die Fixiervorrichtung 8 anfallen und die Kosten für einen zusätzlichen Motor 16 eingespart werden können.

Alternativ kann die Testvorrichtung zum Überprüfen der in einen Montageschlüssel 2 integrierten Winkelmessvorrichtung als kompaktes eigenständiges ("standalone") Gerät realisiert werden, das auf das Überprüfen von Montageschlüsseln 2 mit integrierter Winkelmessvorrichtung spezialisiert und optimiert ist.

Als Motor 16 kann insbesondere ein Schrittmotor zum Einsatz kommen. Die Verwendung eines Schrittmotors ermöglicht es, die Fixiervorrichtung 8 zuverlässig und mit hoher Genauigkeit um einen definierten, vorgegebenen Winkel um die Achse A der Welle 17 zu drehen. Ist der Motor 16 als Schrittmotor ausgebildet, kann auf einen an dem Motor 16 angebrachten Winkelsensor 22 und eine zugehörige externe Anzeigevorrichtung 26 verzichtet werden, da der Winkel, um den die Fixiervorrichtung 8 und damit der Montageschlüssel 2 gedreht werden, durch die Anzahl der von dem Schrittmotor ausgeführten Schritte, die gleich der Anzahl der an den Schrittmotor angelegten elektrischen Impulse ist, und den konstruktionsbedingt konstanten Drehwinkel, den die Welle 17 des Schrittmotors 16 bei jedem Schritt/Impuls ausführt, vorgegeben ist.

In einem weiteren, nicht in den Figuren gezeigten Ausführungsbeispiel wird die Anzeige 6 der in den Montageschlüssel 2 integrierten Winkelmessvorrichtung automatisch, z.B. von einer Kamera, abgelesen und mit dem vorgegebenen Winkel, um den der Motor 16 die Fixiervorrichtung 8 und den darin fixierten Montageschlüssel 2 gedreht hat, verglichen. Das Überprüfen der in den Montageschlüssel 2 integrierten Winkelmessvorrichtung kann so automatisiert werden und menschliche Fehler, die beim Ablesen der Anzeigevorrichtungen 6, 26 und/oder beim Vergleichen der von den beiden Anzeigevorrichtungen 6, 26 abgelesenen Messwerte auftreten können, werden zuverlässig vermieden.

Alternativ oder zusätzlich kann der Montageschlüssel 2 mit einer elektronischen Datenschnittstelle, z.B. mit einer USB- oder Bluetooth-Schnittstelle, ausgebildet sein, um eine direkte elektronische Übertragung des von der in den Montageschlüssel 2 integrierten Winkelmessvorrichtung gemessenen Winkels an eine externe Auswertvorrichtung zu ermöglichen.

Um die Genauigkeit und Zuverlässigkeit der Überprüfung der in den Montageschlüssel 2 integrierten Winkelmessvorrichtung zu erhöhen, kann während eines Mess- und Überprüfungsvorgangs eine Anzahl verschiedener Messpunkte (Winkel) angefahren werden. Für jeden der Messpunkte wird die Abweichung des Winkels, der von der in den Montageschlüssel 2 integrierten Winkelmessvorrichtung ermittelt worden ist, von dem definierten, vorgegebenen Winkel, um den die Welle 17 des Motors 16 gedreht worden ist, bestimmt. In einem zweiten Schritt wird der Mittelwert und/oder der Maximalwert der so bestimmten Abweichungen ermittelt und mit einem vorgegebenen Toleranzwert verglichen, um die Qualität der in den Montageschlüssel 2 integrierten Winkelmessvorrichtung zu bestimmen.

Eine erfindungsgemäße Testvorrichtung und ein erfindungsgemäßes Testverfahren ermöglichen es, eine in einen Montageschlüssel 2 integrierte Winkelmessvorrichtung zuverlässig mit hoher Genauigkeit und bei geringen Kosten zu überprüfen. Ein Zurückführen des Montageschlüssels 2 zum Hersteller ist nur in Ausnahmefällen erforderlich, in denen eine vor Ort nicht korrigierbare Abweichung der Messwerte festgestellt wird.

Die Wartungskosten für Montageschlüssel 2 mit integrierter Winkelmessvorrichtung können dauerhaft reduziert werden, ohne dass es zu Einbußen bei der Qualität der mit den Montageschlüsseln 2 hergestellten Schraubverbindungen kommt.

## Patentansprüche

1. Verfahren zum Überprüfen eines Montageschlüssels (2) mit integrierter Winkelmessvorrichtung, wobei das Verfahren durch die folgenden Schritte gekennzeichnet ist:
Fixieren des Montageschlüssels (2) in einer drehbaren Fixiervorrichtung (8);
Aktivieren der in den Montageschlüssel (2) integrierten Winkelmessvorrichtung;
Drehen der Fixiervorrichtung (8) um wenigstens einen definierten Winkel;
Ablesen des von der in den Montageschlüssel (2) integrierten Winkelmessvorrichtung gemessenen Drehwinkels; und
Vergleichen des von der in den Montageschlüssel (2) integrierten Winkelmessvorrichtung gemessenen Drehwinkels mit dem definierten Winkel, um den die Fixiervorrichtung (8) gedreht worden ist.

2. Verfahren nach Anspruch 1, wobei das Drehen der Fixiervorrichtung (8) mit konstanter Winkelgeschwindigkeit erfolgt.

3. Verfahren nach Anspruch 1 oder 2, wobei das Aktivieren der in den Montageschlüssel (2) integrierten Winkelmessvorrichtung durch Drehen eines Kontaktbereiches des Montageschlüssels (2) erfolgt.

4. Testvorrichtung zum Überprüfen eines Montageschlüssels (2), in den eine Winkelmessvorrichtung integriert ist, **dadurch gekennzeichnet, dass** die Testvorrichtung eine Fixiervorrichtung (8) aufweist, die zum Fixieren eines zu überprüfenden Montageschlüssels (2) ausgebildet ist, wobei die Fixiervorrichtung (8) um einen Winkel drehbar ist, der an der Testvorrichtung vorgebbar und/oder ablesbar ist.

5. Testvorrichtung nach Anspruch 4, wobei ein Drehwinkelsensor (22) vorgesehen ist, um den Winkel, um den die Fixiervorrichtung (8) gedreht worden ist, zu messen.

6. Testvorrichtung nach Anspruch 5, wobei der Drehwinkelsensor (22) ausgebildet ist, den Winkel, um den die Fixiervorrichtung (8) gedreht worden ist, mit hoher Genauigkeit, insbesondere mit einer Genauigkeit von mindestens 0,1 Grad zu messen.

7. Testvorrichtung nach einem der Ansprüche 4 oder 6 mit einem Motor (16), der ausgebildet ist, um die Fixiervorrichtung (8) zu drehen.

8. Testvorrichtung nach Anspruch 7, wobei der Motor (16) ein Schrittmotor ist.

9. Testvorrichtung nach Anspruch 8, wobei der Schrittmotor (16) ausgebildet ist, die Fixiervorrichtung (8) in Schritten von nicht mehr als 0,1 Grad zu drehen.

10. Testvorrichtung nach einem der Ansprüche 4 bis 9, wobei der Motor (16) Teil eines Einspritzpumpenprüfstandes ist.

## Claims

1. Method for checking an assembly wrench (2) with integrated angle measuring device, wherein the method is **characterized by** the following steps:
fixing the assembly wrench (2) in a rotatable fixing device (8);
activating the angle measuring device integrated in the assembly wrench (2);
rotating the fixing device (8) by at least a defined angle;
reading the rotational angle measured by the angle measuring device integrated in the assembly wrench (2); and
comparing the rotational angle measured by the angle measuring device integrated in the assembly wrench (2) with the defined angle by which the fixing device (8) has been rotated.

2. Method according to Claim 1, wherein the fixing device (8) is rotated at a constant angular speed.

3. Method according to Claim 1 or 2, wherein the angle measuring device integrated in the assembly wrench (2) is activated by rotating a contact region of the assembly wrench (2).

4. Testing device for checking an assembly wrench (2) in which an angle measuring device is integrated, **characterized in that** the testing device has a fixing device (8) which is designed to fix an assembly wrench (2) to be checked, wherein the fixing device (8) can be rotated by an angle which can be predefined and/or read on the testing device.

5. Testing device according to Claim 4, wherein a rotational angle sensor (22) is provided in order to measure the angle by which the fixing device (8) has been rotated.

6. Testing device according to Claim 5, wherein the rotational angle sensor (22) is designed to measure the angle by which the fixing device (8) has been rotated with high accuracy, in particular with an accuracy of at least 0.1 degrees.

7. Testing device according to either of Claims 4 and 6, having a motor (16) which is designed to rotate the fixing device (8).

8. Testing device according to Claim 7, wherein the motor (16) is a stepping motor.

9. Testing device according to Claim 8, wherein the stepping motor (16) is designed to rotate the fixing device (8) in steps of no more than 0.1 degrees.

10. Testing device according to one of Claims 4 to 9, wherein the motor (16) is part of an injection pump test bench.

## Revendications

1. Procédé pour contrôler une clé de montage (2) avec un dispositif de mesure d'angle intégré, dans lequel le procédé est **caractérisé par** les étapes suivantes:
fixation de la clé de montage (2) dans un dispositif de fixation rotatif (8);
activation du dispositif de mesure d'angle intégré dans la clé de montage (2);
rotation du dispositif de fixation (8) d'au moins un angle défini;
lecture de l'angle de rotation mesuré par le dispositif de mesure d'angle intégré dans la clé de montage (2); et
comparaison de l'angle de rotation mesuré par le dispositif de mesure d'angle intégré dans la clé de montage (2) avec l'angle défini, dont le dispositif de fixation (8) a été tourné.

2. Procédé selon la revendication 1, dans lequel la rotation du dispositif de fixation (8) est effectuée avec une vitesse angulaire constante.

3. Procédé selon la revendication 1 ou 2, dans lequel l'activation du dispositif de mesure d'angle intégré dans la clé de montage (2) est effectuée par rotation d'une zone de contact de la clé de montage (2).

4. Dispositif de test permettant de contrôler une clé de montage (2), dans laquelle un dispositif de mesure d'angle est intégré, **caractérisé en ce que** le dispositif de test présente un dispositif de fixation (8), qui est conçu pour la fixation d'une clé de montage (2) à contrôler, dans lequel le dispositif de fixation (8) peut tourner d'un angle, qui peut être prédéfini ou lu sur le dispositif de test.

5. Dispositif de test selon la revendication 4, dans lequel il est prévu un capteur d'angle de rotation (22), destiné à mesurer l'angle dont le dispositif de fixation (8) a été tourné.

6. Dispositif de test selon la revendication 5, dans lequel le capteur d'angle de rotation (22) est conçu pour mesurer avec une grande précision, en particulier avec une précision d'au moins 0,1 degré, l'angle dont le dispositif de fixation (8) a été tourné.

7. Dispositif de test selon l'une des revendications 4 ou 6 avec un moteur (16), qui est conçu pour faire tourner le dispositif de fixation (8).

8. Dispositif de test selon la revendication 7, dans lequel le moteur (16) est un moteur pas à pas.

9. Dispositif de test selon la revendication 8, dans lequel le moteur pas à pas (16) est conçu pour faire tourner le dispositif de fixation (8) avec des pas non supérieurs à 0,1 degré.

10. Dispositif de test selon l'une quelconque des revendications 4 à 9, dans lequel le moteur (16) fait partie d'un banc d'essai de pompe d'injection.
